# EUROPEAN PATENT APPLICATION

(11) **EP 2 423 463 A2**
(43) Date of publication of application: **29.02.2012**
(21) Application number: 10163690.0
(22) Date of filing: 24.05.2010
(51) Int. Cl.: F01K 13/02, F01K 23/10

(54) **Control for improved thermal performance of a steam turbine at partial load**

(30) Priority: 01.06.2009 US 475917
(71) Applicant: General Electric Company, Schenectady, NY 12345 (US)
(72) Inventor: Holt, Joel Donnell, Scotia, NY 12302 (US); Di Palma, Steven, Sterling, MA 01564-2044 (US); Sathyanarayana, Dileep, Clifton Park, NY 12065 (US)
(74) Representative: Bedford, Grant Richard

(57) **Abstract**

A method controls at least a portion of a combined cycle power plant (10) having at least one gas turbine (12), at least one heat recovery steam generator (24), and at least one steam turbine (64). The method includes developing an actual operating curve (202, 302) of a steam characteristic of the at least one heat recovery steam generator (24) versus an amount of steam provided to the at least one steam generator from the at least one heat recovery steam generator (24). The method also includes determining the steam characteristic of the at least one heat recovery steam generator (24) at a point in time during operation of the combined cycle power plant (10). The method further includes providing an amount of the steam from the at least one heat recovery steam generator (24) to the at least one steam turbine (64) depending upon the determined steam characteristic of the at least one heat recovery steam generator (24) at the point in time.

## Description

The subject matter disclosed herein relates to combined cycle power plants and, in particular, to the control of a heat recovery steam generator for improved thermal performance of a steam turbine as part of a combined cycle power plant operating at partial load.

A combined cycle power plant combines at least one gas turbine with a steam turbine (i.e., a "1 x 1" arrangement) to produce power (e.g., electrical power) at the output of the steam turbine. Oftentimes two gas turbines are combined with a single steam turbine (i.e., a "2 x 1" arrangement) in the combined cycle power plant to improve partial load operational efficiencies of the power plant. The gas turbine operates as a prime mover to produce work according to the Brayton Cycle ("topping cycle"). The hot exhaust gases from the turbine section of the gas turbine are typically directed to a heat recovery steam generator ("HRSG"), which produces steam from the recovered heat, with the steam being provided to a steam turbine. Each gas turbine in a 2 x 1 system typically has its own dedicated HRSG, with the output of each HRSG provided to the single steam turbine. Other combined cycle power plant arrangements of various numbers of gas turbines, HRSG's and steam turbines are known in the art. The shaft horsepower produced in the steam turbine at its output according to the Rankine Cycle is typically converted to electrical power in an electrical generator ("bottoming cycle"). The combined cycle power plant also includes appropriate controls (e.g., one or more computer control systems) and other, balance of plant items or components (e.g., valves, condenser, condensate pump, etc.).

At the interface between the HRSG and the steam turbine, a pressure limit ("floor pressure") value is typically required for proper HRSG and steam turbine operation. This floor pressure limit is typically the pressure associated with the high pressure drum portion of the HRSG. It is known in the art to simply establish a static or constant, set value for this floor pressure limit in the combined cycle power plant computer control system. An exemplary value for this floor pressure has been known in the art to be approximately 40% of rated (100%) pressure. Having a fixed or set floor pressure value (e.g., a single number) has enabled the HRSG manufacturer to make design decisions with the assumption that the HRSG will not be operated intentionally below the set floor pressure value. These design decisions include header sizing, piping, section sizing and valve sizing. The set value for the floor pressure also factors into the power plant design when bypass valves are sized. Additionally, a set floor pressure value makes possible the existence of additional available steam reserves when the steam turbine shifts to forward flow. In general, as the selected constant set value for the floor pressure is increased, the stresses placed on various components of the steam turbine are correspondingly increased.

This set floor pressure value, along with other known solutions, typically have not been based on any engineering analysis. For example, a combined cycle power plant that does not utilize at least the known floor pressure value described above may run for extended periods at relatively low pressure, resulting in possible flow accelerated corrosion, carryover, noise and vibration. Also, since a typical combined cycle power plant runs at base or full load less than 90% of the time, operation of the power plant at partial load the majority of the time incurs inefficiencies in performance with a set floor pressure limit.

According to one aspect of the invention, a method controls at least a portion of a combined cycle power plant having at least one gas turbine, at least one heat recovery steam generator, and at least one steam turbine. The method includes developing an actual operating curve of a steam characteristic of the at least one heat recovery steam generator versus an amount of steam provided to the at least one steam generator from the at least one heat recovery steam generator. The method also includes determining the steam characteristic of the at least one heat recovery steam generator at a point in time during operation of the combined cycle power plant. The method further includes providing an amount of the steam from the at least one heat recovery steam generator to the at least one steam turbine depending upon the determined steam characteristic of the at least one heat recovery steam generator at the point in time. According to another aspect of the invention, a system is part of a combined cycle power plant having at least one gas turbine, at least one heat recovery steam generator, and at least one steam turbine. The system includes memory that stores data, and a processor that executes instructions, at least some of the instructions being in the form of a method for controlling at least a portion of the combined cycle power plant. The method includes the step of developing an actual operating curve of a steam characteristic of the at least one heat recovery steam generator versus an amount of steam provided to the at least one steam generator from the at least one heat recovery steam generator, the actual operating curve being stored as data in the memory. The method also includes the step of determining the steam characteristic of the at least one heat recovery steam generator at a point in time during operation of the combined cycle power plant. The method further includes the step of providing an amount of the steam from the at least one heat recovery steam generator to the at least one steam turbine depending upon the determined steam characteristic of the at least one heat recovery steam generator at the point in time.

According to yet another aspect of the invention, a computer program product includes a computer-readable computer program code for controlling at least a portion of a combined cycle power plant having at least one gas turbine, at least one heat recovery steam generator, and at least one steam turbine, and instructions for causing a computer to implement a method for controlling at least a portion of the combined cycle power plant. The method further includes the steps of developing an actual operating curve of a steam characteristic of the at least one heat recovery steam generator versus an amount of steam provided to the at least one steam generator from the at least one heat recovery steam generator. The method also includes the step of determining the steam characteristic of the at least one heat recovery steam generator at a point in time during operation of the combined cycle power plant. The method further includes the step of providing an amount of the steam from the at least one heat recovery steam generator to the at least one steam turbine depending upon the determined steam characteristic of the at least one heat recovery steam generator at the point in time.

Various advantages and features will become more apparent from the following description taken in conjunction with the drawings.

The subject matter, which is regarded as the invention, is particularly pointed out and distinctly claimed in the claims at the conclusion of the specification. The foregoing and other features and advantages of the invention are apparent from the following detailed description taken in conjunction with the accompanying drawings in which:
FIG. 1 is a block diagram of an exemplary embodiment of a combined cycle power plant which may include embodiments of the invention;
FIG. 2 is a graph of a model of an operating curve in the control of the combined cycle power plant of FIG. 1 according to an embodiment of the invention; and
FIG. 3 is a graph of an actual operating curve in the control of the combined cycle power plant of FIG. 1 according to an embodiment of the invention.

The detailed description explains embodiments of the invention, together with advantages and features, by way of example with reference to the drawings.

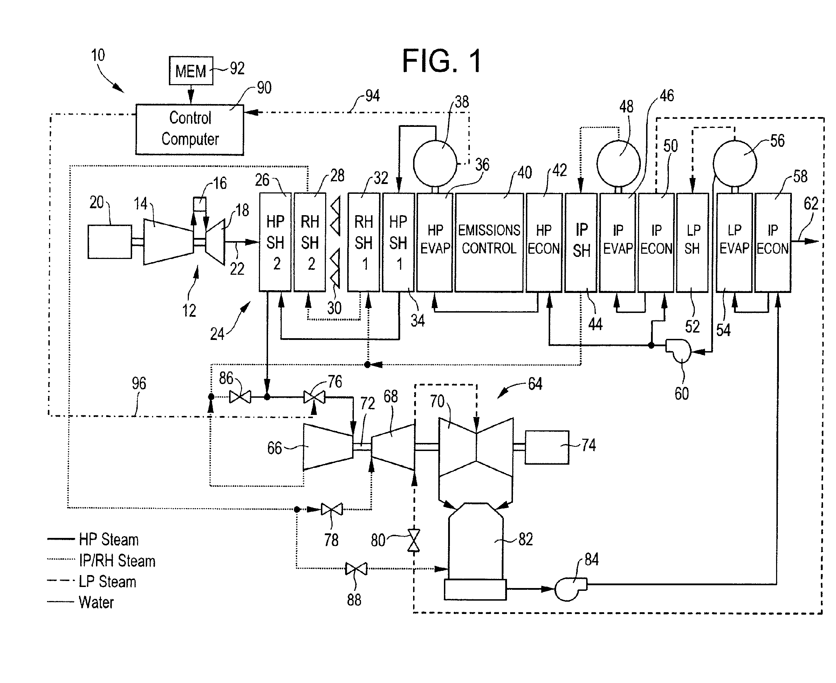

In FIG. 1 is an exemplary embodiment of a combined cycle power plant 10 in which embodiments of the invention may be practiced. The power plant 10 includes a gas turbine 12, which may be of conventional design and which includes a compressor section 14, a combustor 16 and a turbine section 18. An electrical generator 20 may connect to the compressor section 14. The hot exhaust gases 22 from the turbine section 18 of the gas turbine 12 are typically directed to a heat recovery steam generator ("HRSG") 24, which is also a part of the combined cycle power plant 10. In particular, the hot exhaust gases 22 may be provided to a high pressure superheater second section ("HP SH 2") 26 of the HRSG 24.

The HRSG 24 may comprise primarily conventional components, which operate in a conventional manner, an exemplary embodiment of one such HRSG 24 being depicted in FIG. 1. Other designs of HRSG's 24 may be utilized in embodiments of the invention. Thus, the HRSG 24 of FIG. 1 may comprise a reheat superheater second section ("RH SH 2") 28, duct burners 30 for supplementary firing, a reheat superheater first section ("RH SH 1") 32, a high pressure superheater first section ("HP SH 1") 34, a high pressure evaporator ("HP EVAP") 36, and a high pressure drum 38. The HRSG 24 may also include an emissions control 40, a high pressure economizer ("HP ECON") 42, an intermediate pressure superheater ("IP SH") 44, an intermediate pressure evaporator ("IP EVAP") 46, and an intermediate pressure drum 48. The HRSG 24 may further include an intermediate pressure economizer ("IP ECON") 50, a low pressure superheater ("LP SH") 52, a low pressure evaporator 54, a low pressure drum 56, an intermediate pressure economizer ("IP ECON") 58, and a boilerwater feed pump 60. The output 62 from the IP ECON section 58 represents the exhaust gas from the HRSG 24, which may be provided to a stack. The economizer sections 42, 50, 58 in FIG. 1 may comprise, for example, relatively large tubes sections that preheat water before being converted to steam in the corresponding evaporator sections 36, 46, 54. Various forms of steam (e.g., high pressure, intermediate pressure/reheat, low pressure) and water provided between the various components of the combined cycle power plant 10 of FIG. 1 are indicated in FIG. 1 by the corresponding various types of contiguous and dotted lines.

The combined cycle power plant 10 of FIG. 1 may also include a steam turbine 64, which may be of conventional design. The steam turbine 64 may include a high pressure section 66, an intermediate pressure section 68, and a low pressure section 70, with the three sections 66-70 being connected together by a single shaft 72. Also connected to the shaft 72 as part of the steam turbine is an electrical generator 74, which may represent the output of the combined cycle power plant 10 of FIG. 1. The steam turbine 64 may also includes various valves, including a main steam stop and control valve 76, which controls the amount of high pressure steam admitted to the high pressure section 66 of the steam turbine 64 coming from the high pressure superheater second section ("HP SH 2") 26 of the HRSG 24. An intercept control valve 78 is also provided as part of the steam turbine 64, which controls the amount of reheat steam from the RH SH 2 section 28 of the HRSG 24 provided to the intermediate pressure section 68 of the steam turbine 64. Further, an admission control valve 80 is provided as part of the steam turbine 64, which controls the amount of low pressure steam from the IP ECON section 50 of the HRSG 24 to the discharge point of the intermediate pressure section 68 of the steam turbine 64.

The combined cycle power plant 10 of the embodiment of FIG. 1 may also include various other, balance of plant items or components, which, for most if not all, may comprise conventional components. These include a condenser 82, a condensate pump 84, a high pressure to reheat bypass valve 86 ("cascade bypass"), a reheat to condenser bypass valve 88 ("reheat bypass"), and a control computer 90. The control computer 90 may comprise a main control computer for the entire combined cycle power plant 10, or may comprise one of several computers utilized in the control of the combined cycle power plant 10. The control computer 10 may comprise a processor or computer or processor system of known type, and may also include various types of memory embodied therein (e.g., SRAM, DRAM, ROM, etc.) and/or to interact with the processor, as is known in the art, including a portable media type of memory 92 (e.g., CD, DVD, floppy disk, or other types of computer program products) that can be transportable between a plurality of computer systems and which may contain software or program code to cause the computer system, and thus the combined cycle power plant 10, in which it is located to operate in a certain manner.

According to an embodiment of the invention illustrated in FIG. 1 and described and illustrated in more detailed hereinafter, the combined cycle power plant 10 operates in part according to or along a curve of the percent rated pressure of the high pressure drum 38 of the HRSG 24 versus the percent of the high pressure steam flow provided by the high pressure superheater second section ("HP SH 2") 26 of the HRSG 24 to the high pressure section 66 of the steam turbine 64 through the valve 76. The steam from the HP SH 2 section 26 represents the superheated steam flow output coming from the HRSG 24.

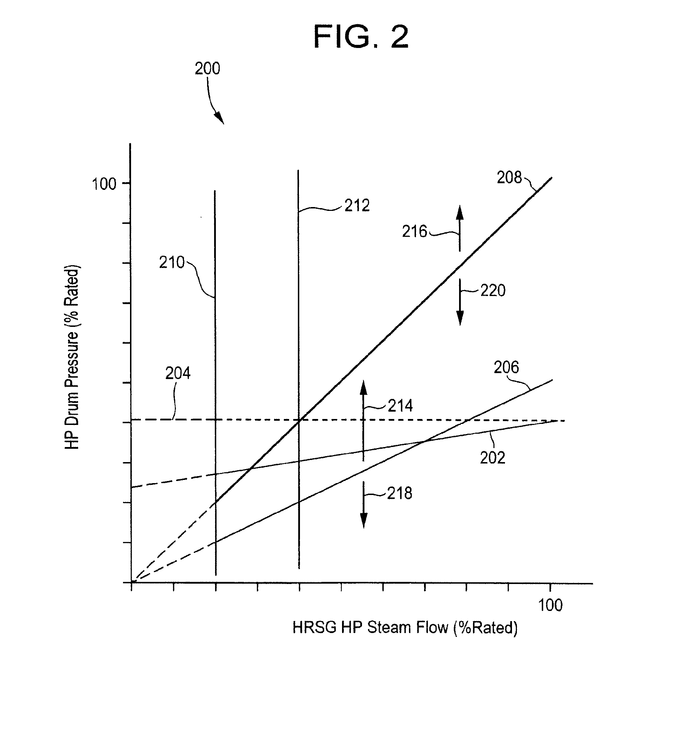

In FIG. 2 is a graph 200 of a predictive model of an operating curve 202, according to an embodiment of the invention, of the percent rated pressure of the high pressure drum 38 of the HRSG 24 versus the percent of the high pressure steam flow provided by the high pressure superheater second section ("HP SH 2") 26 of the HRSG 24 to the high pressure section 66 of the steam turbine 64. The model operating curve 202 of FIG. 2 may, for example, be empirically developed or developed by some other suitable modeling or other method. The operating curve 202 may be utilized, according to embodiments of the invention, instead of the known prior art constant or set value (e.g., 40%) line of operation 204 for the floor pressure limit, described hereinabove. As can be seen in FIG. 2, the model operating curve 202 comprises HP drum pressure values lower than the 40% line of operation 204 of the prior art for all values of HP steam flow pressure below 100%. The curve 202 represents, according to an embodiment of the invention, a desired operating condition that comprises a line of constant velocity of the steam exiting the high pressure drum 38, which may represent the maximum amount of steam exiting the high pressure drum 38 (FIG. 1).

According to various embodiments of the invention, the model operating curve 202, when being developed, takes into account one or more of the physical limitations of one or more of the various components within the HRSG 24, such as, for example, the separation capacity of the high pressure drum 38 (which is a factor in establishing the maximum amount of steam exiting the high pressure drum 38, and, thus, the constant velocity of such steam), the high pressure and reheat pipe steam velocities, section pressure drops, HP evaporator section 36 steaming, etc. Note that these components and the physical limitations thereof are exemplary. Other components of the HRSG 24 and their corresponding physical limitations may be taken into account, either alone or in combination, when developing the model operating curve 202.

Also shown in FIG. 2 is the system natural pressure line 206 for a "1 x 1" arrangement for a combined cycle power plant (i.e., one gas turbine 12 (FIG. 1) and one steam turbine 64 (FIG. 1)), as well as the system natural pressure line 208 for a "2 x 1" arrangement for a combined cycle power plant (i.e., two gas turbines 12 (FIG. 1) and one steam turbine 64 (FIG. 1)). The system natural pressure lines 206, 208 represent the points of operation at and below which where the main steam stop and control valve 76 becomes fully open. The single model operating curve 202 shown in FIG. 2 may be utilized for both the "1 x 1" arrangement or the "2 x 1" arrangement. FIG. 2 also shows a steam turbine minimum flow rated vertical line of operation 210 (e.g., at 20% of HP steam flow), and a gas turbine 12 (FIG. 1) minimum emissions compliance vertical line of operation 212 (e.g., at 40% of HP steam flow).

For each system natural pressure line 206, 208 shown in FIG. 2, lines with arrowheads 214, 216, each extending upwards, show control of the amount of steam provided by the valve 76 to the high pressure turbine section 66 (i.e., with the valve 76 "throttling"). Also, for each system natural pressure line 206, 208 shown in FIG. 2, lines with arrowheads 218, 220, each extending downwards, show control of the amount of steam provided by the bypass valve 86 to the high pressure turbine section 66 (i.e., with the valve 76 fully open; that is, operation below the corresponding system natural pressure lines 206, 208).

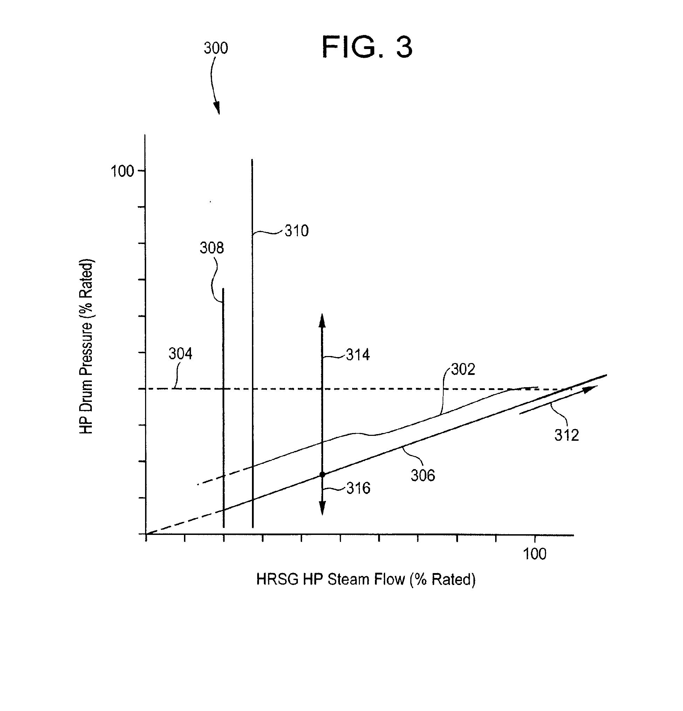

In FIG. 3 is a graph 300 of an actual operating curve 302 according to an embodiment of the invention, of the percent rated pressure of the high pressure drum 38 of the HRSG 24 versus the percent of the high pressure steam flow provided by the high pressure superheater second section ("HP SH 2") 26 of the HRSG 24 to the high pressure section 66 of the steam turbine 64. For example, the actual operating curve 302 may be that of a combined cycle power plant 10 (FIG. 1) in a "2 x 1" arrangement with one gas turbine 12 operational, although the actual operating curve 302 may be suitable for other combined cycle power plant configurations (e.g., a "1 x 1" arrangement). The actual operating curve 302 of FIG. 3 may result from operation of a combined cycle power plant 10 in test trials using the model operating curve 202 of FIG. 2 and examining the results of such operation. Thus, the actual operating curve 302, when being implemented, also takes into account one or more of the physical limitations of one or more of the various components within the HRSG 24, such as, for example, the separation capacity of the high pressure drum 38, the high pressure and reheat pipe steam velocities, section pressure drops, HP evaporator section 36 steaming, etc.

In FIG. 3 is also the 40% floor pressure line 304 of the prior art, the system natural pressure line 306, the steam turbine minimum flow rated vertical line 308 (e.g., at 20% of HP steam flow), and the gas turbine 12 (FIG. 1) minimum emissions compliance vertical line 310 (e.g., at approximately 28% of HP steam flow in this exemplary embodiment). With respect to the system natural pressure line 306, operation beyond 100% of HP steam flow may cause duct firing to occur (as illustrated by the line with an arrowhead 312) in some embodiments of combined cycle power plants 10 (FIG. 1). In addition, for the system natural pressure line 306 shown in FIG. 3, a line with an arrowhead 314 extending upwards shows control of the amount of steam provided by the valve 76 to the high pressure turbine section 66 (i.e., with the valve 76 "throttling"). Also, for the system natural pressure line 306 shown in FIG. 3, a line with an arrowhead 316 extending downwards shows control of the amount of steam provided by the bypass valve 86 to the high pressure turbine section 66 (i.e., with the valve 76 fully open).

For any point along the horizontal axis (i.e., HRSG HP Steam Flow % Rated) in the graph 300 of FIG. 3, the distance between the system natural pressure line 306 and the actual operating curve 302 at that point represents the amount of "throttling" of the valve 76 that results from control of the amount of high pressure steam admitted to the high pressure section 66 of the steam turbine 64. As can be seen in FIG. 3, this distance is smaller for most points along the actual operating curve 302, as compared to the distance between the 40% line 304 in FIG. 3 and the system natural pressure line 306 in FIG. 3. As a result, operation according to the actual operating curve 302 of FIG. 3 provides for a smaller differential pressure across the valve 76. This provides for less throttling loss, higher steam turbine output, and improved thermal cycle efficiency of the steam turbine 64. In this exemplary embodiment, the actual operating curve 302 is lower in high pressure drum pressure (vertical axis in FIG. 3) for all gas turbine 12 (FIG. 1) loads below approximately 85%. Thus, the actual operating curve 302 provides for improved performance of the HRSG 24, and thus, of the combined cycle power plant 10 at partial loads.

In FIG. 1, the high pressure drum 38 provides a signal to the control computer 90 on a corresponding signal path 94, such as at least one of a wired or wireless line or the like that establishes the signal path 94. The signal on the path 94 is indicative of the velocity of the steam exiting the high pressure drum 38 and may be sensed or determined directly or indirectly by any suitable type of sensor or other device associated with the high pressure drum 38. According to embodiments of the invention, the control computer 90 may have stored in the memory associated with the control computer 90 (either the memory that is embodied as part of the computer control 90 (e.g., SRAM, DRAM, ROM, etc.) or the portable memory 92 (e.g., a type of computer program product described hereinabove such as a DVD, CD, floppy disk, etc.) that interacts with the control computer 90 when "connected" therewith, the actual operating curve 302 of FIG. 3. The actual operating curve 302 of FIG. 3 may be a part of the control software (e.g., in the form of data) that controls a portion or all of the combined cycle power plant 10 of FIG. 1. That is, the actual operating curve may be a computer-implemented invention in various embodiments of the invention, wherein the actual operating curve may comprise data executed by instructions embodied in a suitable programming language by the processor that is part of the control computer 90.

In operation, when the control computer 90 receives the signal on the path 94 indicative of the velocity of the steam exiting the high pressure drum 38 of FIG. 1, the control computer 90 then uses the actual operating curve 302 of FIG. 3 to determine the amount of high pressure steam flow to allow to pass through the valve 76 (FIG. 1) and on to the high pressure section 66 of the steam turbine 64. This may be carried out in an embodiment by the control computer 90 providing a signal indicative of the amount of high pressure steam from the HP SH 2 section 26 of the HRSG 24 to be passed through the main steam stop and control valve 76 and on to the high pressure section 66 of the steam turbine 64. This signal is provided on a corresponding signal path 96, such as at least one of a wired or wireless line or the like that establishes the signal path 96. The technical effect of embodiments of the invention is to provide for a smaller differential pressure across the valve 76, which provides for less throttling loss across the valve 76, relatively higher steam turbine output, and improved thermal cycle efficiency of the steam turbine 64. In the embodiment of FIG. 3, the actual operating curve 302 is lower in high pressure drum pressure (vertical axis in FIG. 3) for all gas turbine 12 (FIG. 1) loads below approximately 85%. Thus, the actual operating curve 302 provides for improved performance of the HRSG 24, and thus, of the combined cycle power plant 10 at partial loads.

Embodiments of the invention replace a static floor pressure requirement (i.e., a single number - e.g., 40%), or even no pressure requirement within the control for pressure, with a relatively more intuitive physics-based control curve for the floor pressure requirement of the high pressure drum 38 (FIG. 1) that reduces the pressure in the HRSG based on one or more physical limitations within the HRSG portion of the combined cycle power plant. These physical limitations include, for example, high pressure drum separation capacity, high pressure and low pressure pipe velocity, section pressure drops, and high pressure evaporator steaming. The model control curve 202 (FIG. 2) may be developed, for example, empirically by using a gatecycle model of a proposed combined cycle power plant to run a number of cases from which the actual control curve 302 (FIG. 3) may be developed. Thus, the actual control curve 302 according to various embodiments of the invention comprises a dynamic floor pressure control.

Through use of the control curve of embodiments of the invention, the pressure is lower in value at all gas turbine loads below approximately 85%, although this may vary depending upon the configuration of the HRSG utilized. As a result, the steam turbine main control valve has a relatively lower differential pressure across the valve, which provides for relatively less throttling loss and, thus, relatively higher steam turbine output and increased thermal cycle efficiency.

Various embodiments of the invention provide for control of a combined cycle power plant, operating primarily at partial load. Specifically, embodiments of the invention enable control of the HRSG pressure within real physical limitations or boundaries of the HRSG system that allow for relatively lower pressure in the high pressure steam system. This results in relatively less throttling of the steam turbine main control valves, which results in an increase in the steam turbine output and an increase in cycle efficiency.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A method for controlling at least a portion of a combined cycle power plant having at least one gas turbine, at least one heat recovery steam generator, and at least one steam turbine, the method comprising the steps of:
   developing an actual operating curve of a steam characteristic of the at least one heat recovery steam generator versus an amount of steam provided to the at least one steam generator from the at least one heat recovery steam generator;
   determining the steam characteristic of the at least one heat recovery steam generator at a point in time during operation of the combined cycle power plant; and
   providing an amount of the steam from the at least one heat recovery steam generator to the at least one steam turbine depending upon the determined steam characteristic of the at least one heat recovery steam generator at the point in time.
2. The method of clause 1, the step of providing an amount of the steam to the at least one steam turbine depending upon the determined steam characteristic of the at least one heat recovery steam generator at the point in time further comprising controlling a valve to provide the amount of steam to the at least one steam turbine.
3. The method of any preceding clause, wherein the steam characteristic of the at least one heat recovery steam generator comprises a characteristic of a high pressure drum within the at least one heat recovery steam generator.
4. The method of any preceding clause, wherein the characteristic of a high pressure drum within the at least one heat recovery steam generator comprises a velocity of the steam exiting the high pressure drum.
5. The method of any preceding clause, the step of developing an actual operating curve of a steam characteristic of the at least one heat recovery steam generator versus an amount of steam provided to the at least one steam generator from the at least one heat recovery steam generator further comprising accounting for one or more of the physical limitations of one or more components within the heat recovery steam generator.
6. The method of any preceding clause, wherein the one or more physical limitations of the one or more components of the heat recovery steam generator includes a separation capacity of the high pressure drum, high pressure and reheat pipe steam velocities, section pressure drops, and high pressure evaporator section steaming.
7. The method of any preceding clause, the step of developing an actual operating curve of a steam characteristic of the at least one heat recovery steam generator versus an amount of steam provided to the at least one steam generator from the at least one heat recovery steam generator further comprising generating a model operating curve of the steam characteristic and developing the actual operating curve from the model operating curve.
8. A system that is part of a combined cycle power plant having at least one gas turbine, at least one heat recovery steam generator, and at least one steam turbine, the computer system comprising:
   memory that stores data; and
   a processor that executes instructions, at least some of the instructions being in the form of a method for controlling at least a portion of the combined cycle power plant, the method comprising the steps of:
      developing an actual operating curve of a steam characteristic of the at least one heat recovery steam generator versus an amount of steam provided to the at least one steam generator from the at least one heat recovery steam generator, the actual operating curve being stored as data in the memory;
      determining the steam characteristic of the at least one heat recovery steam generator at a point in time during operation of the combined cycle power plant; and
      providing an amount of the steam from the at least one heat recovery steam generator to the at least one steam turbine depending upon the determined steam characteristic of the at least one heat recovery steam generator at the point in time.
9. The system of any preceding clause, the step of providing an amount of the steam to the at least one steam turbine depending upon the determined steam characteristic of the at least one heat recovery steam generator at the point in time further comprising controlling a valve to provide the amount of steam to the at least one steam turbine.
10. The system of any preceding clause, wherein the steam characteristic of the at least one heat recovery steam generator comprises a characteristic of a high pressure drum within the at least one heat recovery steam generator.
11. The system of any preceding clause, wherein the characteristic of a high pressure drum within the at least one heat recovery steam generator comprises a velocity of the steam exiting the high pressure drum.
12. The system of any preceding clause, the step of developing an actual operating curve of a steam characteristic of the at least one heat recovery steam generator versus an amount of steam provided to the at least one steam generator from the at least one heat recovery steam generator further comprising accounting for one or more of the physical limitations of one or more components within the heat recovery steam generator.
13. The system of any preceding clause, wherein the one or more physical limitations of the one or more components of the heat recovery steam generator includes a separation capacity of the high pressure drum, high pressure and reheat pipe steam velocities, section pressure drops, and high pressure evaporator section steaming.
14. The system of any preceding clause, the step of developing an actual operating curve of a steam characteristic of the at least one heat recovery steam generator versus an amount of steam provided to the at least one steam generator from the at least one heat recovery steam generator further comprising generating a model operating curve of the steam characteristic and developing the actual operating curve from the model operating curve.
15. A computer program product, comprising:
   a computer-readable computer program code for controlling at least a portion of a combined cycle power plant having at least one gas turbine, at least one heat recovery steam generator, and at least one steam turbine; and
   instructions for causing a computer to implement a method for controlling at least a portion of the combined cycle power plant, the method further comprising the steps of:
      developing an actual operating curve of a steam characteristic of the at least one heat recovery steam generator versus an amount of steam provided to the at least one steam generator from the at least one heat recovery steam generator;
      determining the steam characteristic of the at least one heat recovery steam generator at a point in time during operation of the combined cycle power plant; and
      providing an amount of the steam from the at least one heat recovery steam generator to the at least one steam turbine depending upon the determined steam characteristic of the at least one heat recovery steam generator at the point in time.
16. The computer program product of any preceding clause, the step of providing an amount of the steam to the at least one steam turbine depending upon the determined steam characteristic of the at least one heat recovery steam generator at the point in time comprising controlling a valve to provide the amount of steam to the at least one steam turbine.
17. The computer program product of any preceding clause, wherein the steam characteristic of the at least one heat recovery steam generator comprises a characteristic of a high pressure drum within the at least one heat recovery steam generator.
18. The computer program product of any preceding clause, wherein the characteristic of a high pressure drum within the at least one heat recovery steam generator comprises a velocity of the steam exiting the high pressure drum.
19. The computer program product of any preceding clause, the step of developing an actual operating curve of a steam characteristic of the at least one heat recovery steam generator versus an amount of steam provided to the at least one steam generator from the at least one heat recovery steam generator further comprising accounting for one or more of the physical limitations of one or more components within the heat recovery steam generator.
20. The computer program product of any preceding clause, wherein the one or more physical limitations of the one or more components of the heat recovery steam generator includes a separation capacity of the high pressure drum, high pressure and reheat pipe steam velocities, section pressure drops, and high pressure evaporator section steaming.

## Claims

1. A method for controlling at least a portion of a combined cycle power plant (10) having at least one gas turbine (12), at least one heat recovery steam generator (24), and at least one steam turbine (64), the method comprising the steps of:
developing an actual operating curve (202, 302) of a steam characteristic of the at least one heat recovery steam generator (24) versus an amount of steam provided to the at least one steam generator (24) from the at least one heat recovery steam generator (24);
determining the steam characteristic of the at least one heat recovery steam generator (24) at a point in time during operation of the combined cycle power plant (10); and
providing an amount of the steam from the at least one heat recovery steam generator (24) to the at least one steam turbine (64) depending upon the determined steam characteristic of the at least one heat recovery steam generator (24) at the point in time.

2. The method of claim 1, the step of providing an amount of the steam to the at least one steam turbine (64) depending upon the determined steam characteristic of the at least one heat recovery steam generator (24) at the point in time further comprising controlling a valve (76) to provide the amount of steam to the at least one steam turbine (64).

3. The method of any preceding claim, wherein the steam characteristic of the at least one heat recovery steam generator (24) comprises a characteristic of a high pressure drum (38) within the at least one heat recovery steam generator (24).

4. The method of claim 3, wherein the characteristic of a high pressure drum (38) within the at least one heat recovery steam generator (24) comprises a velocity of the steam exiting the high pressure drum (38).

5. The method of any preceding claim, the step of developing an actual operating curve (202, 302) of a steam characteristic of the at least one heat recovery steam generator (24) versus an amount of steam provided to the at least one steam generator from the at least one heat recovery steam generator (24) further comprising accounting for one or more of the physical limitations of one or more components within the heat recovery steam generator (24).

6. The method of claim 5, wherein the one or more physical limitations of the one or more components of the heat recovery steam generator (24) includes a separation capacity of the high pressure drum (38), high pressure and reheat pipe steam velocities, section pressure drops, and high pressure evaporator (36) section steaming.

7. The method of any preceding claim, the step of developing an actual operating curve (202, 302) of a steam characteristic of the at least one heat recovery steam generator (24) versus an amount of steam provided to the at least one steam generator from the at least one heat recovery steam generator (24) further comprising generating a model operating curve (202, 302) of the steam characteristic and developing the actual operating curve (202, 302) from the model operating curve (202, 302).
